# EUROPÄISCHE PATENTSCHRIFT

(11) **EP 1 510 378 B1**
(45) Veröffentlichungstag und Bekanntmachung des Hinweises auf die Patenterteilung: **06.02.2008**
(21) Anmeldenummer: 04018773.4
(22) Anmeldetag: 06.08.2004
(51) Int. Cl.: B60H 1/00

(54) **Trommelklappe**
Drum valve
Volet a tambour

(30) Priorität: 25.08.2003 DE 10339337
(43) Veröffentlichungstag der Anmeldung: 02.03.2005
(73) Patentinhaber: Behr GmbH & Co. KG, 70469 Stuttgart (DE)
(72) Erfinder: Gundel, Holger, 70839 Gerlingen (DE)
(74) Vertreter: Grauel, Andreas

(56) Entgegenhaltungen:
- EP-A- 0 266 230
- EP-A- 1 095 802
- EP-A- 1 308 325
- WO-A-20/05044605
- FR-A- 2 788 019

## Beschreibung

Die Erfindung betrifft eine Trommelklappe, für eine Kraftfahrzeug-Klimaanlage und/oder -Heizeinrichtung, gemäß dem Oberbegriff des Anspruchs 1, und wie in EP 266 230 offenbart.

Trommel- oder Zylinderklappen haben üblicherweise einen hohlzylindrischen Querschnitt, wobei der Dichtbereich in Umfangsrichtung verläuft. Dabei treten häufig Probleme mit Reibungskräften zwischen der Trommelklappe und der Anlagefläche auf. Werden die Durchmesser von Trommelklappe und Anlagefläche mit einem zu großen Spiel gewählt, so wird dieses Problem zwar gelöst, es kommt dann jedoch zu einer Leckage in Folge eines zwischen der Trommelklappe und der Anlagefläche vorhandenen Spalts. Daher lassen derartige Trommelklappen noch Wünsche offen.

Es ist Aufgabe der Erfindung, eine Trommelklappe der eingangs genannten Art zu verbessern.

Diese Aufgabe wird gelöst durch eine Trommelklappe mit den Merkmalen des Anspruchs 1.

Erfindungsgemäß wird eine Trommelklappe, insbesondere für eine Kraftfahrzeug-Klimaanlage und/oder -Heizeinrichtung, vorgesehen, wobei die Trommelklappe radial oder schräg zur Umfangsrichtung verlaufende Dichtflächen aufweist, wobei zwei nebeneinander angeordnete, kurvenförmige Bereiche vorgesehen sind die in einem stumpfen Winkel aneinanderstossen, welche das Problem der Reibung zwischen einer bekannten Trommelklappe, die in einem Luftführungsgehäuse mit geringem Spiel angeordnet ist, beziehungsweise des Dichtspalts bei zu großem Spiel löst. Dadurch können die Betätigungskräfte gesenkt werden. Unter einer Trommelklappe ist hierbei im Wesentlichen eine um eine Drehachse gelagerte Klappe, mit von dieser Drehachse beabstandeten Flächenelementen, die eine Klappenwandung bilden, zu verstehen, wobei diese Flächenelemente zylindrisch, eben und/oder allgemein konkav oder konvex gekrümmt sein können.

Bevorzugt verläuft die Dichtfläche in radialer Richtung und in Längsrichtung der Trommelklappe, was die auftretenden Kräfte zwischen der Trommelklappe und dem Gehäuse minimiert.

Vorzugsweise ist an der Trommelklappe mindestens ein an ihrer Außenmantelfläche in Längsrichtung verlaufender Steg vorgesehen, an dem die beiden Dichtflächen für die beiden Endstellungen vorgesehen sind.

Der Krümmungs-Radius mindestens eines Bereichs der Außenmantelfläche der Trommelklappe ist vorzugsweise größer als der maximale Durchmesser der Trommelklappe. Insbesondere ist der besagte Steg im Bereich dieses stumpfen Winkels auf der Außenmantelfläche der Trommelklappe angeordnet.

Bevorzugt werden in einer Kraftfahrzeug-Klimaanlage und/oder - Heizeinrichtung zwei achssymmetrisch zueinander angeordnete Trommelklappen in einem Luftführungsgehäuse angeordnet, um zwei einander gegenüberliegende Öffnungen, insbesondere eine Umluftöffnung und eine Frischluftöffnung zu regeln, durch welche der Klimaanlage Luft zugeführt werden kann. Dabei kann auf Grund entsprechend symmetrischer Ausgestaltungen der entsprechende Bereich des Luftführungsgehäuses so ausgebildet werden, dass dieser Bereich für Fahrzeuge mit Rechts- und mit Linkslenkung gleich ist, wodurch ein Baukastensystem möglich wird, das unter anderem die Herstellungskosten und die Lagerhaltungskosten verringert.

In einer erfindungsgemäßen Weiterbildung ist eine Kraftfahrzeug-Klimaanlage und/oder -Heizeinrichtung mit einem Gebläse, einem Heizwärmetauscher und/oder einem Verdampfer, sowie mit einer erfindungsgemäßen Trommelklappe ausgestattet.

Im Folgenden wird die Erfindung anhand eines Ausführungsbeispiels unter Bezugnahme auf die Zeichnung im Einzelnen erläutert. Es zeigen:
- Fig.1: eine erfindungsgemäße schematisch dargestellte Trommelklappe mit einem Teil eines Luftführungsgehäuses einer Klimaanlage in Längsrichtung der Trommelklappe gesehen,
- Fig. 2: die Trommelklappe von Fig. 1 aus einer anderen Perspektive,
- Fig. 3: die Trommelklappe von Fig. 1 aus einer weiteren Perspektive, und
- Fig. 4: einen teilweise offen dargestellten Teil einer Klimaanlage, in den eine erfindungsgemäße Trommelklappe eingebaut werden kann.

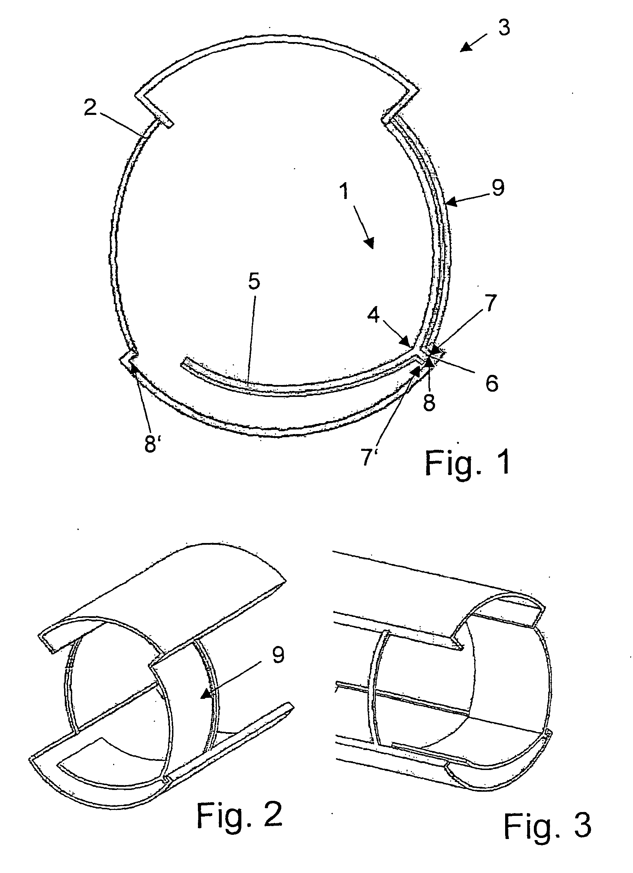

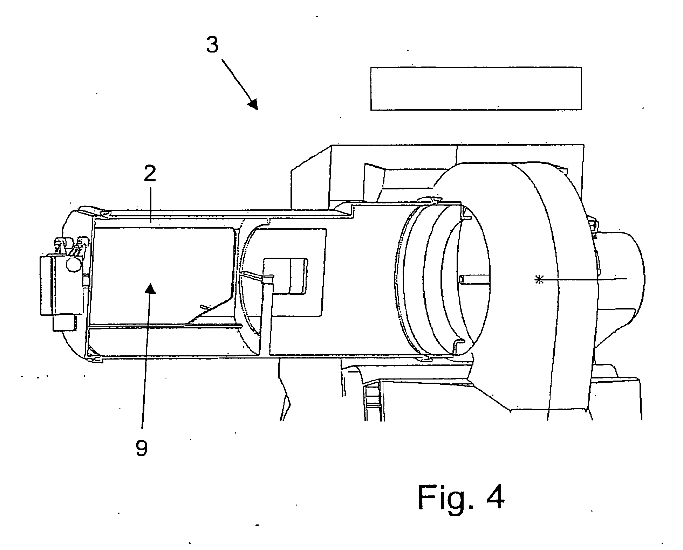

Fig. 1 zeigt eine schematisch dargestellte Trommelklappe 1 und einen Teil eines Luftführungsgehäuses 2 einer Kraftfahrzeug-Klimaanlage 3, wobei in Fig. 4 ein größerer Teil der Klimaanlage dargestellt ist. Die Trommelklappe 1 weist zwei in einem stumpfen Winkel 4 zueinander angeordnete kurvenförmige Bereiche 5 und einen dazwischen nach außen vorstehenden Steg 6 auf, welcher mit seiner einen, in radialer Richtung und in Längsrichtung verlaufenden Dichtfläche 7 an einer ersten Dichtfläche 8 des Luftführungsgehäuses 2 anliegt. Die Trommelklappe 1 ist um ihre Schwenkachse im Luftführungsgehäuse 2 um einen vorgegebenen Winkel verschwenkbar, wobei der Winkel durch die erste Dichtfläche 8 und eine zweite Dichtfläche 8' begrenzt ist, an der bei entsprechendem Verdrehen der Trommelklappe 1 die zweite in radialer Richtung und in Längsrichtung verlaufende Dichtfläche 7' der Trommelklappe 1 in Anlage kommt.

Das Luftführungsgehäuse 2 weist im Schwenkbereich der Trommelklappe 1 einen größeren Durchmesser als im weiteren Bereich des Umfangs auf. Vorliegend ist gegenüberliegend des Bereichs mit größerem Durchmesser ein zweiter entsprechender Bereich ausgebildet, in den eine zweite, entsprechend ausgebildete Trommelklappe (nicht dargestellt) verschwenkt werden kann. So können mit einer entsprechend ausgebildeten Trommelklappe beispielsweise die Umluft- und Frischluftöffnungen im Luftführungsgehäuse geregelt werden.

Die zu verschließende Öffnung 9 ist, wie in den Figuren dargestellt, im Bereich mit kleinerem Durchmesser des Luftführungsgehäuses 2 angeordnet. Ein Teil eines Luftführungsgehäuses 2 ist in Fig. 4 dargestellt.

Gemäß einer Variante ist der Steg nicht vorhanden, sondern die Dichtflächen werden direkt durch die aneinanderstossenden kurvenförmigen Bereiche gebildet. Das Luftführungsgehäuse ist entsprechend ausgebildet, so dass die einander entsprechenden Dichtflächen parallel zueinander verlaufen.

### Bezugszeichenliste

- 1: Trommelklappe
- 2: Luftführungsgehäuse
- 3: Klimaanlage
- 4: stumpfer Winkel
- 5: kurvenförmiger Bereich
- 6: Steg 6
- 7,: 7' Dichtfläche
- 8,: 8' Dichtfläche
- 9: Öffnung

## Patentansprüche

1. Trommelklappe für eine Kraftfahrzeug-Klimaanlage (3), wobei die Trommelklappe (1) radial oder schräg zur Umfangsrichtung verlaufende Dichtflächen (7, 7') aufweist, **dadurch gekennzeichnet, dass** zwei nebeneinander angeordnete, kurvenförmige Bereiche (5) der Außenmantelfläche vorgesehen sind, die in einem stumpfen Winkel (4) aneinanderstoßen.

2. Trommelklappe nach Anspruch 1, **dadurch gekennzeichnet, dass** die Dichtfläche (7, 7') in radialer Richtung und in Längsrichtung der Trommelklappe (1) verläuft.

3. Trommelklappe nach Anspruch 1 oder 2, **dadurch gekennzeichnet, dass** die Trommelklappe (1) mindestens einen an ihrer Außenmantelfläche in Längsrichtung verlaufenden Steg (6) aufweist, welcher die Dichtflächen (7, 7') bildet.

4. Trommelklappe nach einem der vorstehenden Ansprüche, **dadurch gekennzeichnet, dass** der Krümmungs-Radius mindestens eines Bereichs (5) der Außenmantelfläche der Trommelklappe (1) größer als der maximale Durchmesser der Trommelklappe (1) ist.

5. Trommelklappe nach einem der vorstehenden Ansprüche, **dadurch gekennzeichnet, dass** im Bereich des stumpfen Winkels (4) auf der Außenmantelfläche der Trommelklappe (1) ein in Längsrichtung derselben verlaufender Steg (6) angeordnet ist.

6. Trommelklappe nach einem der vorstehenden Ansprüche, **dadurch gekennzeichnet, dass** die Trommelklappe (1) herzförmig ausgebildet ist, wobei die Dichtflächen (7, 7') an den Kanten angeordnet sind.

7. Kraftfahrzeug-Klimaanlage und/oder -Heizeinrichtung mit einem Gebläse, einem Heizwärmetauscher und/oder einem Verdampfer **dadurch gekennzeichnet, dass** diese ein Trommelklappe (1) nach einem der Ansprüche 1 bis 6 enthält.

8. Kraftfahrzeug-Klimaanlage und/oder -Heizeinrichtung nach Anspruch 7, **dadurch gekennzeichnet, dass** zwei Trommelklappen (1) derart achssymmetrisch zueinander angeordnet sind, dass sie die Umluftzufuhr und die Frischluftzufuhr durch zwei einander gegenüberliegende Öffnungen (9) regeln.

## Claims

1. Drum valve for a motor vehicle air conditioning system (3), the drum valve (1) having sealing surfaces (7, 7') extending radially or at an angle to the circumferential direction, **characterised in that** two curved regions (5) of the external cylindrical surface are provided adjacent to one another to abut one another at an obtuse angle (4).

2. Drum valve according to claim 1, **characterised in that** the sealing surface (7, 7') extends in the radial direction and in the longitudinal direction of the drum valve (1).

3. Drum valve according to claim 1 or 2, **characterised in that** the drum valve (1) has at least one web (6) extending in the longitudinal direction on its external cylindrical surface to form the sealing surfaces (7, 7').

4. Drum valve according to any of the preceding claims, **characterised in that** the radius of curvature of at least one region (5) of the external cylindrical surface of the drum valve (1) is greater than the maximum diameter of the drum valve (1).

5. Drum valve according to any of the preceding claims, **characterised in that** a web (6) extending in the longitudinal direction of the drum valve (1) is located in the region of the obtuse angle (4) of the external cylindrical surface.

6. Drum valve according to any of the preceding claims, **characterised in that** the drum valve (1) is heart-shaped, the sealing surfaces (7, 7') being located at the edges.

7. Motor vehicle air conditioning and/or heating system with a fan, a heat exchanger and an evaporator, **characterised in that** it comprises a drum valve (1) according to any of claims 1 to 6.

8. Motor vehicle air conditioning and/or heating system according to claim 7, **characterised in that** two drum valves (1) are arranged asymmetrically relative to one another such that they control the supply of recirculated air and fresh air through two opposite vents (9).

## Revendications

1. Volet à tambour pour climatisation de véhicule automobile (3), le volet à tambour (1) présentant des faces d'étanchéité (7, 7') radiales ou obliques par rapport à la direction du pourtour, **caractérisé en ce que** deux zones (5) incurvées placées l'une à côté de l'autre de l'enveloppe extérieure sont prévues, lesquelles se rencontrent dans un angle obtus (4).

2. Volet à tambour selon la revendication 1, **caractérisé en ce que** la face d'étanchéité (7, 7') s'étend dans la direction radiale et longitudinale du volet à tambour (1).

3. Volet à tambour selon la revendication 1 ou 2, **caractérisé en ce que** le volet à tambour (1) présente au moins une branche (6) s'étendant sur son enveloppe extérieure dans la direction longitudinale, et qui forme les faces d'étanchéité (7, 7').

4. Volet à tambour selon l'une des revendications précédentes, **caractérisé en ce que** le rayon de courbure d'au moins une zone (5) de l'enveloppe extérieure du volet à tambour (1) est supérieur au diamètre maximal du volet à tambour (1).

5. Volet à tambour selon l'une des revendica-Lions précédentes, **caractérisé en ce qu'**au niveau de l'angle obtus (4) sur l'enveloppe extérieure du volet à tambour (1), est disposée une branche (6) s'étendant dans la direction longitudinale dudit volet à tambour (1).

6. Volet à tambour selon l'une des revendications précédentes, **caractérisé en ce que** le volet à tambour (1) est en forme de coeur, les faces d'étanchéité (7, 7') étant disposées sur les arêtes.

7. Climatisation et/au dispositif de chauffage de véhicule automobile comprenant une soufflante, un échangeur thermique de chauffage et/ou un évaporateur, **caractérisé(e) en ce que** celui-ci/celle-ci comprend un volet à tambour (1) selon l'une des revendications 1 à 6.

8. climatisation et/ou dispositif de chauffage de véhicule automobile selon la revendication 7, **caractérisé(e) en ce que** deux volets à tambour (1) sont placés en symétrie d'axe l'un par rapport à l'autre, de façon à ce qu'ils régulent l'arrivée d'air de circulation et l'arrivée d'air frais par deux ouvertures (9) opposées l'une à l'autre.
